# EUROPEAN PATENT APPLICATION

(11) **EP 4 213 037 A1**
(43) Date of publication of application: **19.07.2023**
(21) Application number: 21865955.5
(22) Date of filing: 07.09.2021
(51) Int. Cl.: G06F 16/27, G06F 16/23

(54) **DATA STORAGE AND RECONCILIATION METHOD AND SYSTEM**

(30) Priority: 09.09.2020 CN 202010940203
(71) Applicant: The People's Bank of China National Clearing Center, Beijing 100048 (CN)
(72) Inventor: FANG, Fang, Bejing City 100048 (CN); MA, Xuejun, Bejing City 100048 (CN); ZENG, Yuwei, Bejing City 100048 (CN); NA, Yong, Bejing City 100048 (CN)
(74) Representative: EIP
(86) International application number: PCT/CN2021/116864
(87) International publication number: WO 2022/052901

(57) **Abstract**

The present disclosure provides a data storage and reconciliation method and system, the method comprising: collecting transaction data in a source database according to preset time N, and constructing a storage directory according to collection time of the transaction data; storing data details of the transaction data in a predetermined distributed storage system by means of the storage directory; generating a RowKey according to the storage directory, and storing a transaction number and a transaction amount of target data in a predetermined open source database by means of the RowKey; and performing reconciliation processing on the transaction data collected at a plurality of preset time N within preset time M according to the predetermined open source database and the distributed storage system to acquire a reconciliation result.

## Description

### Technical Field

The present disclosure relates to a field of data processing, and particularly to a data storage and reconciliation method and system.

### Background

Consistency, Availability and Partition tolerance (CAP) theory describes a distributed system, where C means that when a read request from a client accesses any distributed system node, a result of the latest write request certainly can be read; A means that by visiting any surviving distributed system node, a confirmed result (success or failure, rather than timeout or error) certainly can be returned within a time range; and P means whether a loss of message delivery between nodes is allowed in a network. HDFS is a distributed storage system, and for any distributed system, only two, rather than all, of the three points of CAP can be met at most. For example, a minimum number of written copies of the HDFS is N, and if N is 1, P cannot be guaranteed, because when the HDFS synchronizes a single copy of Block to other nodes, if the DataNode service is abnormal, the data of the single copy of Block will be permanently lost, which means that P cannot be guaranteed. If 1 < N<=X, for example, X is equal to 3, three DataNodes will be connected, while three copies must be successfully written, and if any one of the three copies is not conformed to be successfully written, the written data cannot be used externally, which is equivalent to sacrificing A; when the HDFS adopts a multi-copy strategy, the Block being written for each DataNode will record an ackOffset of the currently confirmed written data, which determines that when a client reads data in the present DataNode, a data boundary readable to the client can be returned to the client. When data is written, the DataNode where the last copy is located will update its current ackOffset, and then send an ack to its upstream DataNode; after receiving the ack, the upstream DataNode will also update its ackOffset, and then send the ack to its upstream DataNode as well. This process will theoretically cause a fact that when the ack is transmitted among a plurality of DataNodes, different clients will read different DataNodes, so the data is not consistent, which is equivalent to sacrificing C.

It is clear that the existing HDFS cannot meet the requirements of CAP at the same time, so the industry urgently needs a guarantee mechanism for data consistency, availability and partition tolerance, which indirectly meets the requirements of the CAP theory.

### Summary

The present disclosure aims to provide a data storage and reconciliation method and system, so that a distributed storage system can indirectly meet the requirements of CAP and ensure the consistency, availability and partition tolerance of a distributed storage.

In order to achieve the above objective, a data storage and reconciliation method according to the present disclosure specifically includes: collecting transaction data in a source database according to first preset time, and constructing a storage directory according to collection time of the transaction data; storing data details of the transaction data in a predetermined distributed storage system by means of the storage directory; generating a RowKey according to the storage directory, and storing a transaction number and a transaction amount of target data in a predetermined open source database by means of the RowKey; and performing reconciliation processing on the transaction data collected at N first preset time within second preset time according to the predetermined open source database and the distributed storage system to acquire a reconciliation result, N being an integer greater than or equal to 1.

In the data storage and reconciliation method, preferably, constructing a storage directory according to collection time of the transaction data includes: constructing a storage directory according to a start time stamp and an end time stamp for collecting the transaction data.

In the data storage and reconciliation method, preferably, the first preset time is 10 minutes and the second preset time is 24 hours.

In the data storage and reconciliation method, preferably, performing reconciliation processing on the transaction data collected at N first preset time within second preset time according to the predetermined open source database and the distributed storage system to acquire a reconciliation result includes: counting a transaction number and a transaction amount corresponding to the transaction data collected at N first preset time in the distributed storage system; according to the storage directory, respectively comparing the transaction number and the transaction amount which are counted with those correspondingly stored in the open source database to acquire a reconciliation result.

In the data storage and reconciliation method, preferably, according to the storage directory, respectively comparing the transaction number and the transaction amount which are counted with those correspondingly stored in the open source database further includes: collecting the transaction data of a corresponding time period in the source database according to the storage directory when a comparison result indicates inconsistency, and updating and covering data correspondingly stored in the open source database and the distributed storage system according to the newly collected transaction data.

In the data storage and reconciliation method, preferably, performing reconciliation processing on the transaction data collected at N first preset time within second preset time according to the predetermined open source database and the distributed storage system to acquire a reconciliation result further includes: counting a transaction number and a transaction amount corresponding to the transaction data collected at N first preset time in the distributed storage system; acquiring a transaction number and a transaction amount of the transaction data in the source database according to a time period corresponding to the N first preset time; respectively comparing the transaction number and the transaction amount in the source database with those in the distributed storage system to acquire a reconciliation result.

The present disclosure further provides a data storage and reconciliation system, including a source database, a collection device, a distributed storage system, an open source database and a reconciliation device; the collection device is configured to collect transaction data in the source database according to first preset time, and construct a storage directory according to collection time of the transaction data; store data details of the transaction data in a predetermined distributed storage system by means of the storage directory; and generate a RowKey according to the storage directory, and store a transaction number and a transaction amount of target data in a predetermined open source database by means of the RowKey; the reconciliation device is configured to perform reconciliation processing on the transaction data collected at N first preset time in second preset time according to the open source database and the distributed storage system to acquire a reconciliation result; N being an integer greater than or equal to 1.

In the data storage and reconciliation system, preferably, the reconciliation device includes a technical reconciliation module configured to count a transaction number and a transaction amount corresponding to the transaction data collected at the N first preset time in the distributed storage system, and according to the storage directory, respectively compare the transaction number and the transaction amount which are counted with those correspondingly stored in the open source database to acquire a reconciliation result.

In the data storage and reconciliation system, preferably, the technical reconciliation module further includes a checking unit configured to collect the transaction data of a corresponding time period in the source database according to the storage directory when a comparison result indicates inconsistency, and update and cover data correspondingly stored in the open source database and the distributed storage system according to the newly collected transaction data.

In the data storage and reconciliation system, preferably, the reconciliation device further includes a business reconciliation module configured to count a transaction number and a transaction amount corresponding to the transaction data collected at the N first preset time in the distributed storage system; acquire a transaction number and a transaction amount of the transaction data in the source database according to a time period corresponding to the N first preset time; and respectively compare the transaction number and the transaction amount in the source database with those in the distributed storage system to acquire a reconciliation result.

The present disclosure further provides an electronic device, including a memory, a processor and a computer program stored in the memory and runnable on the processor, wherein the processor implements the above method when executing the computer program.

The present disclosure further provides a computer-readable storage medium, which stores a computer program for performing the above method.

The present disclosure has the advantageous technical effect that by introducing the small batch storage and the day-end reconciliation, the requirements of consistency, availability and partition tolerance of the data in the HDFS distributed storage are indirectly guaranteed, and the expected effect is achieved.

### Brief Description of the Drawings

The drawings illustrated here, which is included to provide a further understanding of the present disclosure, constitute a part of the present disclosure rather than limiting the present disclosure. In the drawings:
FIG. 1 is a flowchart of a data storage and reconciliation method according to an embodiment of the present disclosure;
FIG. 2 is a flowchart of a reconciliation according to an embodiment of the present disclosure;
FIG. 3 is a flowchart of a reconciliation according to an embodiment of the present disclosure;
FIG. 4 is a structural diagram of a data storage and reconciliation system according to an embodiment of the present disclosure;
FIG. 5 is a flowchart of an application principle of a data storage and reconciliation system according to an embodiment of the present disclosure;
FIG. 6 is a structural diagram of an electronic device according to an embodiment of the present disclosure.

### Detailed Description of the Preferred Embodiments

The embodiments of the present disclosure will be described in detail below with reference to the drawings and embodiments, so that the implementation process of how to apply technical means to solve the technical problem and achieve the technical effects of the present disclosure can be fully understood and carried out accordingly. It should be noted that as long as there is no conflict, the embodiments of the present disclosure and the features in each embodiment can be combined with each other, and the formed technical solutions fall within the protection scope of the present disclosure.

In addition, steps illustrated in a flowchart of the drawings may be performed in a computer system such as a set of computer-executable instructions, and although a logical sequence is illustrated in the flowchart, in some cases, the steps illustrated or described may be performed in a sequence different from that here.

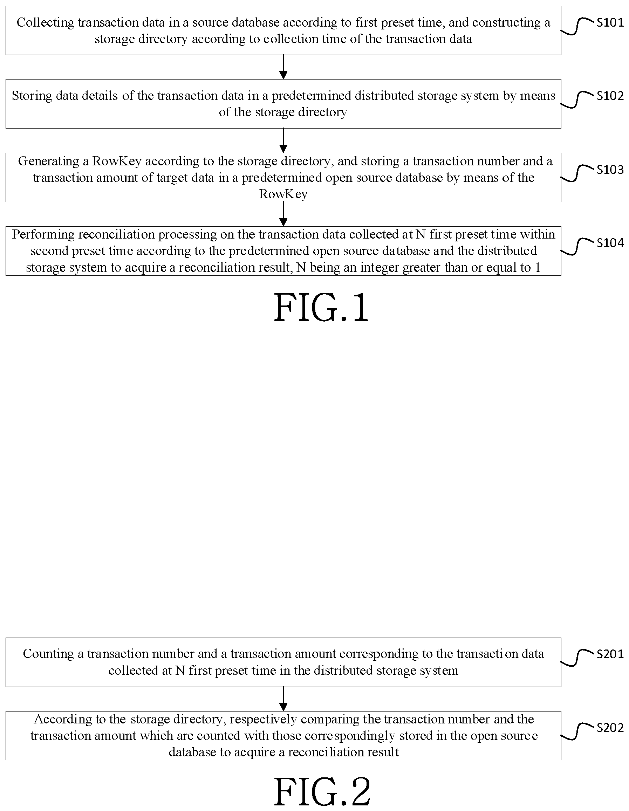

Please refer to FIG. 1, a data storage and reconciliation method according to the present disclosure specifically includes:
S101: collecting transaction data in a source database according to first preset time, and constructing a storage directory according to collection time of the transaction data;
S102: storing data details of the transaction data in a predetermined distributed storage system by means of the storage directory;
S103: generating a RowKey according to the storage directory, and storing a transaction number and a transaction amount of target data in a predetermined open source database by means of the RowKey; and
S104: performing reconciliation processing on the transaction data collected at N first preset time within second preset time according to the predetermined open source database and the distributed storage system to acquire a reconciliation result, N being an integer greater than or equal to 1.

In the above embodiment, constructing a storage directory according to collection time of the transaction data includes: constructing a storage directory according to a start time stamp and an end time stamp for collecting the transaction data. Specifically, the first preset time may be 10 minutes and the second preset time may be 24 hours. Therefore, in actual works, the transaction data may be collected in a cycle of 10 minutes, and the reconciliation processing may be performed in a large cycle at 0: 10 subsequently, so as to meet the requirement of day-end reconciliation. In this process, an open source database HBase is introduced to indirectly ensure the consistency, availability and partition tolerance of the data in the HDFS distributed storage by means of technical reconciliation.

Please refer to FIG. 2, in an embodiment of the present disclosure, performing reconciliation processing on the transaction data collected at N first preset time within second preset time according to the predetermined open source database and the distributed storage system to acquire a reconciliation result includes:
S201: counting a transaction number and a transaction amount corresponding to the transaction data collected at N first preset time in the distributed storage system;
S202: according to the storage directory, respectively comparing the transaction number and the transaction amount which are counted with those correspondingly stored in the open source database to acquire a reconciliation result.

In the above embodiment, according to the storage directory, respectively comparing the transaction number and the transaction amount which are counted with those correspondingly stored in the open source database further includes: collecting the transaction data of a corresponding time period in the source database according to the storage directory when a comparison result indicates inconsistency, and updating and covering data correspondingly stored in the open source database and the distributed storage system according to the newly collected transaction data. Therefore, data inconsistency is prevented and data consistency is ensured.

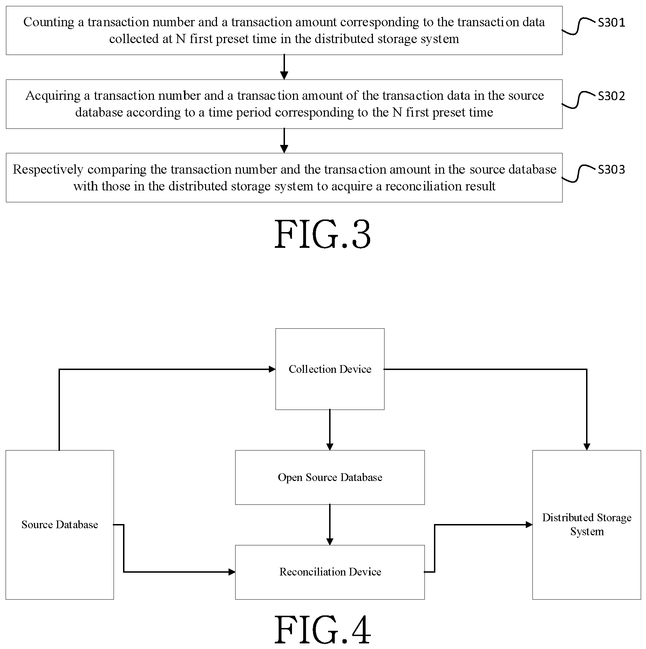

Please refer to FIG. 3, in another embodiment of the present disclosure, performing reconciliation processing on the transaction data collected at N first preset time within second preset time according to the predetermined open source database and the distributed storage system to acquire a reconciliation result further includes:
S301: counting a transaction number and a transaction amount corresponding to the transaction data collected at N first preset time in the distributed storage system;
S302: acquiring a transaction number and a transaction amount of the transaction data in the source database according to a time period corresponding to the N first preset time;
S303: respectively comparing the transaction number and the transaction amount in the source database with those in the distributed storage system to acquire a reconciliation result.

In this embodiment, if the comparison result indicates inconsistency, the way of the previous embodiment can also be adopted, that is, by means of the storage directory, the corresponding transaction data in the source database is updated to the distributed storage system to ensure the data consistency.

Please refer to FIG. 4, the present disclosure further provides a data storage and reconciliation system, which includes a source database, a collection device, a distributed storage system, an open source database and a reconciliation device. The collection device is configured to collect transaction data in the source database according to first preset time, and construct a storage directory according to collection time of the transaction data; store data details of the transaction data in a predetermined distributed storage system by means of the storage directory; and generate a RowKey according to the storage directory, and store a transaction number and a transaction amount of target data in a predetermined open source database by means of the RowKey. The reconciliation device is configured to perform reconciliation processing on the transaction data collected at N first preset time in second preset time according to the open source database and the distributed storage system to acquire a reconciliation result; N being an integer greater than or equal to 1.

In the above embodiment, the reconciliation device includes a technical reconciliation module configured to count a transaction number and a transaction amount corresponding to the transaction data collected at the N first preset time in the distributed storage system; according to the storage directory, respectively compare the transaction number and the transaction amount which are counted with those correspondingly stored in the open source database to acquire a reconciliation result. Further, the technical reconciliation module also includes a checking unit configured to collect the transaction data of a corresponding time period in the source database according to the storage directory when a comparison result indicates inconsistency, and update and cover data correspondingly stored in the open source database and the distributed storage system according to the newly collected transaction data.

In another embodiment of the present disclosure, the reconciliation device further includes a business reconciliation module configured to count a transaction number and a transaction amount corresponding to the transaction data collected at the N first preset time in the distributed storage system; acquire the transaction number and the transaction amount of the transaction data in the source database according to a time period corresponding to the N first preset time; and respectively compare the transaction number and the transaction amount in the source database with those in the distributed storage system to acquire a reconciliation result.

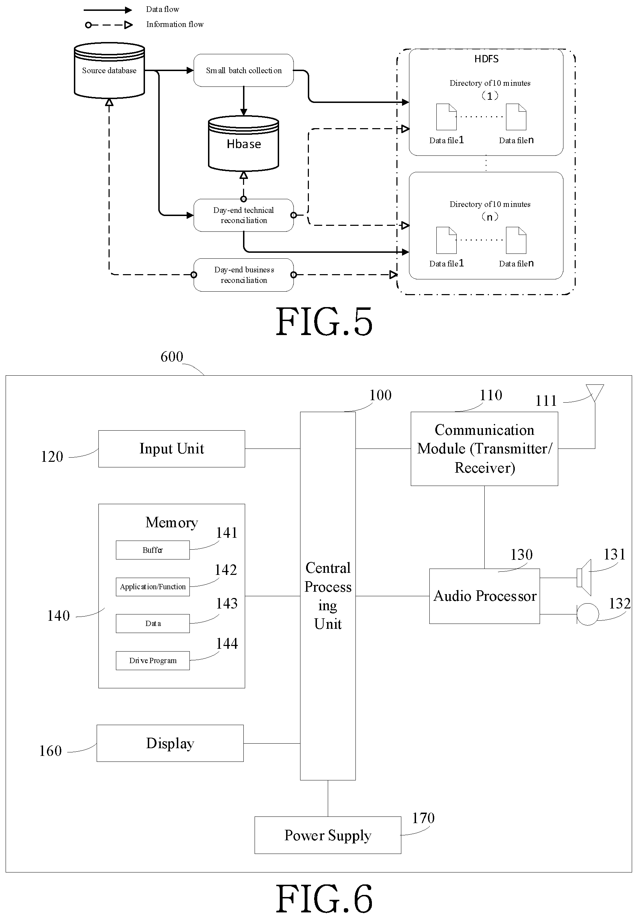

To sum up, the data storage and reconciliation method and system according to the present disclosure mainly include two links in the actual process, i.e., a data collection and saving link and a reconciliation link. An overall description of the above embodiments is given by taking the actual work as an example with reference to FIG. 5. Those skilled in the art will appreciate that this example is only for the convenience of understanding the above embodiments according to the present disclosure, without making any technical limitation.

### 1. Data collection and saving link

In order to meet the requirements of consistency, availability and partition tolerance of data, the data may be collected by way of daily small batches (a batch of data every 10 minutes), and each batch of data contains information including data details within 10 minutes as well as the number and a money amount of the summarized details, in which the data details are saved in an HDFS for storage, and start and end timestamps of the 10 minutes are used as a directory name of the HDFS where this batch of detailed data is located, and the directory name is used as a RowKey to save the money amount of the summarized details of this batch into an HBase for storage.

### 2. Reconciliation link

At 0: 10 every day, a day-end reconciliation of a previous day is started by a timed task. Firstly, a technical reconciliation is performed, that is, the number and the money amount of each small batch of detailed data are reconciled. At this stage, the reconciliation is mainly to calculate the number and a total money amount of a small batch of detailed data in the HDFS, as well as the number and the money amount of this batch having been saved in the HBase. The reconciliation method compares whether the number and the money amount of the reconciliation object are consistent. If so, it means that this batch of data is saved correctly in the HDFS, i.e., the CAP requirements are met; and if not, it is necessary to re-collect this batch of data at the source for resaving. Secondly, business reconciliation is carried out, i.e., under the condition of ensuring that each batch of data is checked correctly, the number and the money amount of all small batches of detailed data in the previous day are calculated, and the number and the money amount of the source data are calculated for consistency check, so as to ensure that the data collected in the previous day is not lost and is available.

The present disclosure has the beneficial technical effect that by introducing the small batch storage and the day-end reconciliation, the requirements of consistency, availability and partition tolerance of the data in the HDFS distributed storage are indirectly guaranteed, and the expected effect is achieved.

The present disclosure further provides an electronic device, including a memory, a processor and a computer program stored in the memory and runnable on the processor, and the processor implements the above method when executing the computer program.

The present disclosure further provides a computer-readable storage medium, which stores a computer program for performing the above method.

As illustrated in FIG. 6, the electronic device 600 may further include a communication module 110, an input unit 120, an audio processing unit 130, a display 160, and a power supply 170. It should be noted that the electronic device 600 does not necessarily include all the components illustrated in FIG. 6. In addition, the electronic device 600 may further include a component not illustrated in FIG. 6, which may refer to the prior art.

As illustrated in FIG. 6, a central processing unit (CPU) 100, sometimes referred to as a controller or an operation control, may include a microprocessor or other processor devices and/or logic devices, and the CPU 100 receives an input and controls operations of the components of the electronic device 600.

In which, the memory 140 may be, for example, one or more of a buffer, a flash memory, a hard drive, a removable medium, a volatile memory, a nonvolatile memory or any other suitable device. The information related to the failure may be stored, and a program for executing the related information may also be stored. In addition, the CPU 100 may execute the program stored in the memory 140 to realize information storage or processing, etc.

The input unit 120 provides an input to the CPU 100. The input unit 120 is, for example, a key or a touch input device. The power supply 170 is configured to supply power to the electronic device 600. The display 160 is configured to display an object to be displayed, such as an image, a character, etc. The display may be, for example, an LCD display, but it is not limited thereto.

The memory 140 may be a solid-state memory, such as a read only memory (ROM), a random-access memory (RAM), a SIM card, etc. It may also be a memory that can hold information even when power is off, be selectively erasable, and be provided with more data. An example of the memory is sometimes called as an EPROM, etc. The memory 140 may also be any other type of device. The memory 140 includes a buffer memory 141 (sometimes called as a buffer). The memory 140 may include an application/function storage portion 142 configured to store an application program and a function program, or a flow for performing the operation of the electronic device 600 by the CPU 100.

The memory 140 may further include a data storage portion 143 configured to store data, such as contacts, digital data, pictures, sounds and/or any other data used by the electronic device. A drive program storage portion 144 of the memory 140 may include various drive programs of the electronic device for performing the communication function and/or other functions of the electronic device, such as a messaging application, an address book application, etc.

The communication module 110 is a transmitter/receiver 110 that transmits and receives signals via an antenna 111. The communication module (transmitter/receiver) 110 is coupled to the CPU 100 to provide an input signal and receive an output signal, which may be the same as the case of a conventional mobile communication terminal.

Based on different communication technologies, a plurality of communication modules 110, such as a cellular network module, a Bluetooth module and/or a wireless local area network module, may be provided in a same electronic device. The communication module (transmitter/receiver) 110 is also coupled to a speaker 131 and a microphone 132 via an audio processor 130, to provide an audio output via the speaker 131 and receive an audio input from the microphone 132, thereby realizing a general telecommunications function. The audio processor 130 may include any suitable buffer, decoder, amplifier, etc. In addition, the audio processor 130 is further coupled to the CPU 100, so that sound can be recorded on the local machine through the microphone 132, and the sound stored in the local machine can be played through the speaker 131.

Those skilled in the art should appreciate that any embodiment of the present disclosure can be provided as a method, a system or a computer program product. Therefore, the present disclosure can take the form of a full hardware embodiment, a full software embodiment, or an embodiment combining software and hardware. Moreover, the present invention can take the form of a computer program product implemented on one or more computer usable storage mediums (including, but not limited to, a magnetic disc memory, a CD-ROM, an optical storage, etc.) containing therein computer usable program codes.

The present disclosure is described with reference to the flowcharts and/or the block diagrams of the method, the device (system) and the computer program product according to the embodiments of the present disclosure. It should be appreciated that each or combinations of the flows and/or the blocks in the flowchart and/or block diagram can be implemented through computer program instructions. The computer program instructions may be provided to a general computer, a dedicated computer, an embedded processor or a processor of any other programmable data processing device, to produce a machine, so that the instructions executed by the computer or the processor of any other programmable data processing device can produce means for realizing the functions specified in one or more flows in the flowchart and one or more blocks in the block diagram.

The computer program instructions may also be stored in a computer-readable memory which is capable of guiding the computer or any other programmable data processing device to work in a specific mode, so that the instructions stored in the computer-readable memory generate a product including instructing means for realizing the functions specified in one or more flows in the flowchart and one or more blocks in the block diagram.

The computer program instructions may also be loaded to the computer or any other programmable data processing device, so that a series of operation steps can be performed in the computer or any other programmable device to generate processing realized by the computer, and the instructions executed in the computer or any other programmable device can provide the steps for realizing the functions specified in one or more flows in the flowchart and one or more blocks in the block diagram.

The above specific embodiments make further detailed explanations to the objectives, the technical solutions and the advantageous effects of the present disclosure. It should be appreciated that those described above are only specific embodiments of the present disclosure and are not intended to limit the protection scope of the present disclosure. Any modification, equivalent substitution, improvement, etc. made within the spirit and principle of the present disclosure should fall within the protection scope of the present disclosure.

## Claims

1. A data storage and reconciliation method, comprising:
collecting transaction data in a source database according to first preset time, and constructing a storage directory according to collection time of the transaction data;
storing data details of the transaction data in a predetermined distributed storage system by means of the storage directory;
generating a RowKey according to the storage directory, and storing a transaction number and a transaction amount of target data in a predetermined open source database by means of the RowKey; and
performing reconciliation processing on the transaction data collected at N first preset time within second preset time according to the predetermined open source database and the distributed storage system to acquire a reconciliation result, N being an integer greater than or equal to 1.

2. The data storage and reconciliation method according to claim 1, wherein constructing a storage directory according to collection time of the transaction data comprises: constructing a storage directory according to a start time stamp and an end time stamp for collecting the transaction data.

3. The data storage and reconciliation method according to claim 1, wherein the first preset time is 10 minutes and the second preset time is 24 hours.

4. The data storage and reconciliation method according to claim 1, wherein performing reconciliation processing on the transaction data collected at N first preset time within second preset time according to the predetermined open source database and the distributed storage system to acquire a reconciliation result comprises:
counting a transaction number and a transaction amount corresponding to the transaction data collected at N first preset time in the distributed storage system;
according to the storage directory, respectively comparing the transaction number and the transaction amount which are counted with those correspondingly stored in the open source database to acquire a reconciliation result.

5. The data storage and reconciliation method according to claim 4, wherein according to the storage directory, respectively comparing the transaction number and the transaction amount which are counted with those correspondingly stored in the open source database further comprises:
collecting the transaction data of a corresponding time period in the source database according to the storage directory when a comparison result indicates inconsistency, and updating and covering data correspondingly stored in the open source database and the distributed storage system according to the newly collected transaction data.

6. The data storage and reconciliation method according to claim 1, wherein performing reconciliation processing on the transaction data collected at N first preset time within second preset time according to the predetermined open source database and the distributed storage system to acquire a reconciliation result further comprises:
counting a transaction number and a transaction amount corresponding to the transaction data collected at N first preset time in the distributed storage system;
acquiring a transaction number and a transaction amount of the transaction data in the source database according to a time period corresponding to the N first preset time;
respectively comparing the transaction number and the transaction amount in the source database with those in the distributed storage system to acquire a reconciliation result.

7. A data storage and reconciliation system, comprising a source database, a collection device, a distributed storage system, an open source database and a reconciliation device;
the collection device is configured to collect transaction data in the source database according to first preset time, and construct a storage directory according to collection time of the transaction data; store data details of the transaction data in a predetermined distributed storage system by means of the storage directory; and generate a RowKey according to the storage directory, and store a transaction number and a transaction amount of target data in a predetermined open source database by means of the RowKey;
the reconciliation device is configured to perform reconciliation processing on the transaction data collected at N first preset time in second preset time according to the open source database and the distributed storage system to acquire a reconciliation result; N being an integer greater than or equal to 1.

8. The data storage and reconciliation system according to claim 7, wherein the reconciliation device comprises a technical reconciliation module configured to count a transaction number and a transaction amount corresponding to the transaction data collected at the N first preset time in the distributed storage system, and according to the storage directory, respectively compare the transaction number and the transaction amount which are counted with those correspondingly stored in the open source database to acquire a reconciliation result.

9. The data storage and reconciliation system according to claim 8, wherein the technical reconciliation module further comprises a checking unit configured to collect the transaction data of a corresponding time period in the source database according to the storage directory when a comparison result indicates inconsistency, and update and cover data correspondingly stored in the open source database and the distributed storage system according to the newly collected transaction data.

10. The data storage and reconciliation system according to claim 7, wherein the reconciliation device further comprises a business reconciliation module configured to count a transaction number and a transaction amount corresponding to the transaction data collected at the N first preset time in the distributed storage system; acquire a transaction number and a transaction amount of the transaction data in the source database according to a time period corresponding to the N first preset time; and respectively compare the transaction number and the transaction amount in the source database with those in the distributed storage system to acquire a reconciliation result.

11. An electronic device, comprising a memory, a processor and a computer program stored in the memory and runnable on the processor, wherein the processor implements the method according to any one of claims 1 to 6 when executing the computer program.

12. A computer-readable storage medium, which stores a computer program for performing the method according to any one of claims 1 to 6.
